# EUROPEAN PATENT APPLICATION

(11) **EP 3 549 670 A1**
(43) Date of publication of application: **09.10.2019**
(21) Application number: 18166046.5
(22) Date of filing: 06.04.2018
(51) Int. Cl.: B01J 23/75, C08G 18/48, C08G 18/67, C08G 18/76, C08G 18/22, G01N 21/00

(54) **MANUFACTURING METHOD FOR A POLYURETHANE-POLY(METH)ACRYLATE RESIN**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a manufacturing method for a thermosetting polyurethanepoly(meth)acrylate resin useful for the production of large molded parts.

## Description

The present invention relates to a manufacturing method for a molded part made from a polyurethane-poly(meth)acrylate resin.

Polyurethane resins are safe and environmentally friendly polymer resins with numerous applications. They have unique and excellent properties which are inter alia especially useful for the production of large molded parts, such as fast curing, low exotherm, high tensile and flexural strength, high resistance to fatigue and chemical corrosion, high ductility, no content of styrene, and low shrinkage rate.

For example, polyurethane resins are being increasingly applied as matrix material for the production of composite materials, e.g. rotor blades for wind turbines, at present (see e.g. WO 2011/069975 A1). In order to create a continuous matrix throughout the entire structure, the matrix should maintain a low viscosity and long gel time or pot-life throughout the infiltration of the reinforcement. Then, after infiltration of the reinforcement materials, a fast setting/cure of the material is crucial for easy handling and processing. The curing of the resin should yield a high degree of conversion as this ensures consistent mechanical properties throughout the life time of the composite material and safe handling. The use of standard polyurethane resins for large composite parts however is restricted by the rather short pot-life and high initial viscosities.

In this application, the term "high degree of conversion" means a conversion > 90 %, preferably 95 %. Conversion rate may be measure via DSC, based on DIN EN ISO 11357-5-2014.

To overcome these deficiencies, such as short pot-life, overly high initial viscosity, and the like, of the traditional polyurethane, various modifications for standard polyurethane resins have been proposed in the literature. For example, the addition of epoxies (WO 2012/022683 A) and the use of glycerol-based polypropylene oxide polyethers (WO 2012/113748 A) and/or dianhydrohexitol (WO 2012/163845 A) in the polyol formulation.

Recently, the preparation of large composite parts made from a polyurethane resin matrix comprising urethane structures and polymerized acrylates ("polyurethane-poly(meth)acrylate resin") has been described. WO 2015/155195 A discloses the preparation of a polyurethane-polyacrylate reactive composition from isocyanates, hydroxyl acrylates and polyols which react in such a way, that the addition polymerization reaction of isocyanate groups and hydroxyl groups and the radical polymerization of olefinic groups take place simultaneously ("one-pot process"). By this, a homogenous network of polyurethanes and polyacrylates is formed, and the reactive composition has a sufficient long pot life, which allows for the processing of large composite parts. The resulting homogenous polymer structure distinguishes the one-pot synthesized polyurethane-polyacrylate polymer, from the prior art (WO 2007/144292 A, US 4560456) where heterogeneous polyurethane-polyacrylate polymers are formed in a two-step approach (initial polyurethane formation, followed by a radical crosslinking), which exhibit a structure with capsulated polyurethane micro-domains.

For the simultaneous formation of polyurethane-linkage and radical polymerization in the resin structure, the reaction conditions for the preparation of the polyurethane-poly(meth)acrylate hybrid resin matrix need to be carefully adjusted. Inevitably, competition between the polyaddition reaction of the urethane bond and the radical polymerization as well as side reactions occurs. WO 2015/155195 A describes that the simultaneous polyaddition and radical polymerization is controllable by the use of catalysts specific for the urethane bonds, and the use of initiators in combination with accelerators and inhibitors specific for the radical polymerization. Suitable catalysts for the urethane bond formation are preferably amine catalysts, organometallic catalysts or a mixture thereof. Whereas suitable initiators for the radical polymerization are preferably peroxides, persulfides, peroxycarbonates, peroxyboric acid, azo compounds or other suitable radical initiators that can initiate curing of an olefine-containing compound. Optionally, there may be also one or more accelerators of the radical polymerization present, such as cobalt compounds or amine compounds. Inhibitors of the radical reaction are preferably phenol, quinine or hindered amine compounds, examples of which include methylhydroquinone, benzoquinone, polymethyl piperidine derivatives, low valence copper ions, etc.

In the manufacturing process of large molded parts, production time generally is dependent on the curing time of the polymer matrix. The problem occurs that, e.g. depending on thickness and heat conduction in the part, progress of the curing process (meaning the complete formation of the three dimensional network of the resin) may be different in the different regions of the part. This is especially true for large molded composite materials, e.g. prepared by liquid injection of polyurethane-poly(meth)acrylate resins in fiber reinforcement material. For the producer of such parts, it would therefore be of great advantage to be able to determine the progress of the curing process in order to avoid deficiencies caused by irregular and/or non-sufficient curing.

It has now surprisingly been found, that the presence of specific components in the resin offers the possibility to follow the curing process with an optical testing method. With this, a widely applicable, easy and effective tool for the determination of the minimum curing time needed in the different regions of the part is provided to the producer of the molded part.

The present invention is directed to a manufacturing process for a molded part made from a polyurethane-poly(meth)acrylate reactive composition comprising:
A) an isocyanate component comprising one or more organic polyisocyanates;
B) an isocyanate-reactive component comprising:
   B1) one or more (meth)acrylate monomers containing at least one hydroxyl - functionality
   B2) one or more organic polyols;
   B3) at least one component actinga as radical polymerization accelerator,
   B4) a component acting as curing indicator,
C) a radical reaction initiator,
wherein the manufacturing process comprises the following steps:
a) mixing component B) with components A) and C) to form a polyurethane-poly(meth)acrylate resin mixture M in a one-pot process,
b) subsequent introducing the mixture M into a mold,
c) subsequent reacting M to an uncured polyurethane-poly(meth)acrylate resin R and
d) subsequent curing of R under heating to a temperature between 70 - 140 °C, preferably 80 - 120°C, until the degree of conversion is at or above predefined value V, which is preferably V ≥ 90 %,
   and wherein the degree of conversion is determined by an optical testing method comprising the analysis of the color of a polyurethane-poly(meth)acrylate resin R.

The polyurethane-poly(meth)acrylate reactive composition preferably comprises a cobalt(II) salt which may act as radical polymerization accelerator B3) and curing indicator B4) at the same time.

The present invention is also directed to an optical testing method for the determination of the degree of conversion of the resin R comprising the analysis of the color of a polyurethane-poly(meth)acrylate resin R by visual means or by a quantitative color detection method.

For the purpose of this application, the term "polyisocyanate" is used for an organic compound containing two or more isocyanate groups (-N=C=O).

The term "functionality" or "f' when used in this application means the average functionality (number of Zerewitinoff-active hydrogen atoms per molecule) of a polyol or a polyol mixture on the assumption that it is identical to the average functionality (number of active hydrogen atoms per molecule) of the starter compound(s) used during preparation of the polyol.

The term f(NCO), with regard to an isocyanate, means the average number of reactive isocyanate groups in the respective compound.

The term f(olefine), with regard to a compound, means the average number of reactive olefinic-groups in the respective compound.

For the purpose of this application, the term "one-pot process" is used for a process, wherein the reaction of components A), B1) and B2) is started in presence of C) and B3) and the reaction conditions are chosen in such a manner, that urethane formation and radical olefine polymerization take place simultaneously or at least partly in parallel. Generally, upon mixing all components, the initiation of the polyurethane addition is followed by the radical polymerization reaction at elevated temperature (depending on the thermal lability of the initiator C). Both reactions reach their maximum conversion rate at the same time.

### Polyurethane-poly(meth)acrylate resin:

As polyisocyanate component A), the conventional aliphatic, cycloaliphatic and in particular aromatic di- and/or poly-isocyanates may be used. Examples of such polyisocyanates which are suitable are 1,4-butylene diisocyanate, 1,5-pentane diisocyanate, 1,6-hexamethylene diisocyanate (HDI), isophorone diisocyanate (IPDI), 2,2,4- and/or 2,4,4-trimethylhexamethylene diisocyanate, bis(4,4'-isocyanatocyclohexyl)methane or mixtures thereof with the other isomers, 1,4-cyclohexylene diisocyanate, 1,4-phenylene diisocyanate, 2,4- and/or 2,6-toluene diisocyanate (TDI), 1,5-naphthalene diisocyanate, 2,2'- and/or 2,4'- and/or 4,4'-diphenylmethane diisocyanate (monomeric MDI, mMDI), higher homologues (oligomeric MDI) thereof, mixtures of monomeric and oligomeric MDI (polymeric MDI, pMDI), 1,3- and/or 1,4-bis-(2-isocyanato-prop-2-yl)-benzene (TMXDI), 1,3-bis-(isocyanatomethyl)benzene (XDI). There is preferably used as the isocyanate diphenylmethane diisocyanate (MDI) and, in particular, mixtures of diphenylmethane diisocyanate and polyphenylenepolymethylene polyisocyanate (pMDI). The mixtures of diphenylmethane diisocyanate and polyphenylenepolymethylene polyisocyanate (pMDI) have a preferred monomer content of from 10 to 100 wt.%, preferably from 20 to 80 wt.%, particularly preferably from 30 to 60 wt.%. The NCO content of the polyisocyanate [measured according DIN EN ISO 14896:2009-07] that is used should preferably be greater than 23 wt.%, more preferably greater than 26 wt.%, particularly preferably greater than 30 wt.%. The functionality of the isocyanate should preferably be from 2.0 - 3.5, more preferably 2.1 - 2.9. The viscosity of the isocyanate should preferably be ≤750 mPa*s (at 25°C), more preferably ≤500 mPa*s (at 25°C) and particularly preferably ≤300 mPa*s (at 25°C) [measured according to DIN 53019-1:2008-09]. When used in the invention, the organic polyisocyanate may include dimers, trimers, tetramers or pentamers of the isocyanate and/or a combination thereof.

Modified, capped and prepolymerized isocyanates, which for example may be prepared by reaction of an excessive amount of an organic polyisocyanate or a mixture of organic polyisocyanates with a polyol compound, may also be used as the isocyanate component A). Compounds and methods for production have been described in the technical literature.

The isocyanate-reactive component B) further comprises hydroxyl (meth)acrylate monomers B1).

In a preferred embodiment, the hydroxyl number of the hydroxyl (meth)acrylate monomer is between 150 - 700 mg KOH / g and more preferably 220- 600 mg KOH/g and still more preferably 300- 500 mg KOH/g, the average hydroxyl functionality of B1) is 1-3, more preferably 1 - 2, still more preferably 1, and the average olefinic functionality of B1) is 1- 3, more preferably 1 - 2, still more preferably 1. Especially preferably B1) is selected from the group consisting of hydroxyethyl (meth)acrylate, hydroxypropyl (meth)acrylate, hydroxybutyl (meth)acrylate, and combinations thereof.

B1) may be prepared using a conventional methods in the art, e.g. by esterification reaction between (meth)acrylic anhydride, (meth)acrylic acid or (meth)acryloyl halide and HO-(R²O)ₙ-H. These methods are known to one skilled in the art. See, for example, the description in Chapter 3, Handbook of Polyurethane Raw Materials And Aids (Liu Yijun, published on April 1, 2005) and Chapter 2, Polyurethane Elastomer (Liu Houjun, published in August, 2012), which are incorporated herein in their entirety by reference.

The one or more organic polyols B2) are preferably selected from the group consisting of polyether polyols, polyester polyols, polyetherester polyols, polymer polyols, polycarbonate polyols, polyethercarbonate polyols and combinations thereof. Polyether polyols and / or polyester polyols are particularly preferably used in the polyol formulation. The use of polyether polyols as only polyols is especially preferred.

The polyols are described, for example, by Ionescu in "Chemistry and Technology of Polyols for Polyurethanes", Rapra Technology Limited, Shawbury 2005, p.3 1 ff. (Cap. 3: The General Characteristics of Oligo-Polyols, p.55 ff. (Cap. 4: Oligo-polyols for Elastic Polyurethanes). P. 263ff. (Cap. 8: Polyester Polyols for Elastic Polyurethanes) and, in particular, to page 32 ff. (Cap. 13: Polyether Polyols for Rigid Polyurethane Foams) and S.4 1 9 ff. (Cape. 16: Polyester Polyols for Rigid Polyurethane Foams).

In a preferred embodiment, the hydroxyl number of the polyols is between 150 - 700 mg KOH / g and more preferably 220- 600 mg KOH/g and the average functionality of the polyols in B2) is 1,5 - 4,5, more preferably 1,9 - 3,2, still preferably 2,2 - 2,8.

Values for the hydroxyl number (herein "OH-value") given in this application are measured according DIN EN ISO 53240, part 2 (11/2007).

Preference is given to the use of one or more polyhydroxypolyethers ("polyether polyols") as component B2), which may be prepared by polyaddition of alkylene oxides such as propylene oxide and / or ethylene oxide onto polyfunctional starter compounds in the presence of catalysts, in a manner known by the person skilled in the art. The polyhydroxypolyethers are preferably prepared from a starter compound and one or more alkylene oxides, for example, ethylene oxide, butylene oxide and / or propylene oxide. Preferred starter compounds are molecules having 2 to 8 hydroxyl groups per molecule such as water, ethylene glycol, propylene glycol, diethylene glycol, dipropylene glycol, triethylene glycol, tripropylene glycol, 1,4-butanediol, 1,6-lexanediol, bisphenol A, glycerol, trimethylolpropane, pentaerythritol, sorbitol and sucrose.

Particular preference is given to 1,2- and 1,3-propylene glycol, diethylene glycol, sorbitol, glycerol, trimethylolpropane, sucrose and mixtures of the abovementioned products as starter materials.

Polyether polyols based on propylene oxide are particularly preferred, specifically propylene oxide polyethers with a functionality of 2 - 3. For those polyethers, 1,2-propylene glycol, glycerol and/or trimethylpropane are particularly preferred as starter compound.

Polyester polyols are ester-containing polyhydroxy compounds, e.g. castor oil or polyhydroxy polyesters, such as are obtainable by polycondensation of excess amounts of simple polyhydric alcohols of the type above described, with preferably dibasic carboxylic acids or their anhydrides. The dibasic carboxylic acid is preferably but not limited to an aliphatic carboxylic acid having 2-12 carbons, preferably but not limited to succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a combination thereof. Anhydride of the respective acids may also or alternatively used as educts. Monobasic acids, e.g. benzoic acid or alcanoic acids and/or acids prepared from hydroxyl carboxylic acids, e.g. hydroxy caproic acid, hydroxy butyric acid, hydroxy stearic acid, hydroxyl decanoic acid, and the like, may be used in addition. The polyester polyol also include polyester polyols prepared from or with lactones, e.g. ε-caprolactone, butyrolactone and the like.

Examples for polyhydric alcohols to react with the acids are ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerine, trimethylolpropane, or a combination thereof. Monools may be used in addition.

Biobased compounds and / or derivatives thereof may also be used for the production of polyester polyols, e.g. vegetable oils, vegetable oil polyols or modified products thereof. Vegetable oil is a compound prepared from an unsaturated fatty acid and glycerine, or an oil extracted from e.g. plant fruits or seeds. Examples include but are not limited to castor oil, polyhydroxy-fatty acids, rinoleic acid, grape seed oil, pumpkin seed oil, palm oil, olive oil, avocado oil, coconut oil, palm kernel oil, coco butter, cotton seed oil, pumpkin seed oil, maize oil, sunflower seed oil, wheat germ oil, sesame oil, hemp oil, thistel oil, linseed oil, soybean oil, peanut oil, lupin oil, borrage oil, mustard oil, jatropha oil, walnut oil, jojoba oil, lecithin, e.g. based on soya, primrose oil, wild rose oil, peanut oil, walnut oil, hazelnut oil, canola oil and castor oil etc, Fatty acids, hydroxyl modified fatty acids, polyhydroxy- fatty acids and epoxized fatty acids and fatty acid esters, e.g. based on myristoleic acid, palmitoleic acid, oleic acid, vaccenic acid, petroselic acid, gadoleic acid, erucic acid, nervonic acid, linoleic acid, alpha- and gamma- linoleic acid, stearidonic acid, arachidonic acid, timnodonic acid, clupanodonic acid and cervic acid. Also advantageous is the use of mixtures of such biobased acids with other carboxylic acids, e.g. phthalic acids. Hydroxyl groups may further be introduced into the starter of a vegetable oil polyol by a process such as cracking, oxidation or transesterification, and then the vegetable oil polyols may be prepared using a process known to one skilled in the art for preparing an organic polyol. Esters prepared from ricinoic acid with polyfunctional alcohols are especially preferred when using biobased polyols.

The polyester polyol used in compound B2), alone or in mixture with e.g. polyether polyols, has preferably a molecular weight of 200-3000 g/mol and a functionality of 2-6, preferably 2-4, more preferably 2-3.

Other polyols may be used for component B2), preferably in a mixture with the above described polyether polyols and/or polyester polyols:
Polycarbonate polyols are polycarbonates containing hydroxyl groups, for example polycarbonate diols. They are obtained in the reaction of carbonic acid derivatives, such as diphenyl carbonate, dimethyl carbonate or phosgene, with polyols, preferably diols. Examples of such diols are ethylene glycol, 1,2- and 1,3-propanediol, 1,3- and 1,4-butanediol, 1,6-hexanediol, 1,8-octanediol, neopentyl glycol, 1,4-bishydroxymethylcyclohexane, 2-methyl-1,3-dipropylene glycol, 2,2,4-trimethylpentandiol, polypropylene glycols, dibutylene glycol, polybutylene glycols, bisphenols and lactone-modified diols. Examples for polycarbonate diols and their production may e.g. be found in EP 1359177 A.

Polyethercarbonate polyols may be prepared by addition of carbon dioxide and an alkylene oxide compound to a starter comprising active hydrogen, may also be used in the invention. Examples for polyethercarbonate polyols and their production may e.g. be found in EP 2910585 A, [0024] - [0041].

Polymer polyols are a polymer modified polyether polyols, preferably a grafted polyether polyol, or a polyether polyol dispersion. Examples for polymer polyols and their manufacturing may e.g. be found in pages 89 p., "Kunststoff-Handbuch", Vol. VII "Polyurethanes", 3. Edition, Carl Hanser Verlag, Munich / Vienna, 1993, pages 88-90 and EP 1 873 170 A1.

Polyetherester polyols are polyhydroxy polymers containing ether groups and polyester groups. They may, for example, be produced from the reaction dicarboxylic acids or their derivatives and polyetherpolyols, as described herein, or via epoxidation of starter compounds containing ester groups. Examples of polyetheresters and their synthesis have been described in WO 2010/043624 A and EP 1 923 417 A. Polyetherester polyols may also and advantageously be produced from biobased sources, e.g. from natural oil based acids, esters and polyols, as described herein.

Exemplary representatives of component B2) are furthermore also described in "Kunststoff-Handbuch", Vol. VII "Polyurethanes", 3. Edition, Carl Hanser Verlag, Munich / Vienna, 1993, pages 57-67.

The isocyanate-reactive component B) furthermore contains at least one compound B3) which is selected from the group consisting of components being able to act as a radical polymerization accelerator.

The group of reaction accelerators known to the person skilled in the art comprises e.g. transition metal-based salts (e.g. based on platinum, tin, copper, cobalt or iron), amine-based compounds, ammonium salts and aniline compounds. Most of the compounds disclosed in the literature promote or catalyze both, the urethane polyaddition and radical polymerization. Often, the reaction accelerators for the radical polymerization reaction contain mixtures of the before mentioned compounds.

It is advantageous when the reaction accelerator B3) used in the polyurethane-poly(meth)acrylate reactive composition does not contain catalytically active amines, ammonium salts or potassium salts. Preferably, the reaction accelerator B3) used in the polyurethane-poly(meth)acrylate reactive composition neither contains amines, ammonium salts nor potassium salts.

Preferably, the reaction accelerator B3) comprises cobalt(II) - salts. The use of cobalt(II) carboxylate is especially preferred. A specific advantage is that such cobalt(II)catalysts may also act as color indicator B4.

In a preferred embodiment, the radical reaction accelerator B3) consists of cobalt(II)salts, especially cobalt(II)acetate and/or cobalt(II)ethylhexanoate.

The polyurethane-poly(meth)acrylate reactive composition additionally contains a component acting as curing indicator B4), which may visualize the progress and/or the completeness of the curing process by a color change.

Examples for such indicators may be found in the group of indicators comprising complexes of transition metals. Surprisingly it has been found, that the cobalt(II)salts, especially cobalt(II)acetate and/or cobalt(II)ethylhexanoate, which are advantageously used as component B3), in addition may efficiently indicate the progress and completeness of the curing process by a color change from yellow to red.

Thus, in a preferred embodiment, the polyurethane-poly(meth)acrylate reactive composition comprises a cobalt(II) salt, preferably cobalt(II) acetate and/or cobalt(II) ethylhexanoate, which may act as reaction accelerator B3) and curing indicator B4) at the same time.

The polyurethane-poly(meth)acrylate reactive composition further comprises C) a radical reaction initiator, which may be added into the isocyanate-reactive component B) or into the isocyanate component A) or into both. The initiator may be selected from peroxides, peroxyesters, ketone peroxides, diacyl peroxides, peroxyketals, peroxycarbonates, persulfides, peroxyboric acid, azo compounds and/or other suitable radical initiators that can initiate curing of a double bond-containing compound. The examples include tert-butylperoxy isopropyl carbonate, tert-butylperoxy 3,5,5-trimethylhexanoate, methyl ethyl ketone peroxide, cumyl hydroperoxide, and tert-butyl peroxybenzoate. Peroxyesters with the following structure I are preferred: 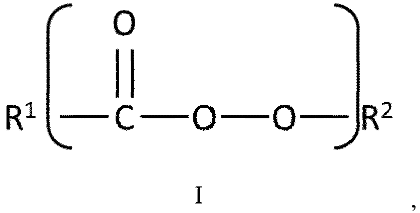
wherein R¹ and R² represent alkyl and / or aryl groups
tert-Butyl peroxybenzoate, tert-amyl peroxybenzoate and/or tert-amyl peroxyacetate are especially preferred. tert-Butyl peroxybenzoate is most preferred.

If a radical initiator with a peroxyester-functionality having the structure (I) is added, its content, referred to the amount of the carbonylperoxy-moiety [-(C=O)OO]- is preferably 0,1 - 3 wt.-%, based on 100 wt.% by weight of the isocyanate reactive component, with 0,1 - 2 wt.-% being especially preferred.

Radical reaction suppressants suitable for the invention include polymerization inhibitors, polymerization retarders and the like. Radical reaction suppressants include but is not limited to some phenol, quinine or not catalytically active amine compounds (e.g. sterically hindered amines), examples of which include, p-methoxyphenol, benzoquinone, polymethyl piperidine derivatives, etc.

Radical reaction promotors suitable for the invention which can increase reactivity of initiator and accelerator combinations include but are not limited to organic ligands such as acetylacetone and not catalytically active amines, e.g. sterically hindered amines, N,N-dimethylacetoacetamide, N,N-diethylacetoacetamide, etc.

B) may optionally also contain further isocyanate-reactive compounds (= active hydrogen atoms), such as, for example, compounds with SH groups and acidic CH groups. However, even if isocyanate-reactive compounds with such further active hydrogen atoms are present, more than 90%, in particular more than 95%, especially more than 99% and very particularly 100% of all isocyanate-reactive hydrogen atoms in B) result from OH groups. In a preferred embodiment, there are no amine-groups containing isocyanate reactive components in B2.

In addition to components B1 and B2, B) may optionally also contain compounds comprising one or more olefinic functionalities such as but not limited to allyl / aryl (meth)acrylate, ether (meth)acrylate, and crosslinking acrylate and methacrylate monomers containing isocyanate-reactive groups different from hydroxyl groups.

In addition, the polyurethane-poly(meth)acrylate reactive composition may also contain non-isocyanate reactive compounds such as, for example, compounds containing one or more olefinic functionalities, such as, but not limited to, styrene, vinyl ester, acrylate and methacrylic monomers such as but not limited to allyl / aryl (meth)acrylate, ether (meth)acrylate, and crosslinking acrylate and (meth)acrylate monomers with f(olefine) > 1.

The polyurethane-poly(meth)acrylate reactive composition may also comprise further aids or additives, as long as they do not include catalytically active amines. The further aids or additives include but not limited to fillers, inner release agents, flame retardants, smoke suppressants, dyes, pigments, antistatic agents, antioxidants, UV stabilizers, diluents, antifoam agents, coupling agents, surface wetting agents, leveling agents, moisture scavengers, molecular sieves, thixotropic agents, plasticizers, blowing agents, foam stabilizers, foam homogenizers, radical reaction suppressants, or combinations thereof, which may be optionally included in the isocyanate component A) and/or the isocyanate-reactive component B) or added separately to the polyurethane-poly(meth)acrylate reactive composition upon mixing.

In some embodiments of the invention, the filler is selected from the group consisting of aluminum hydroxide, bentonite, fly ash, wollastonite, perlite powder, fly ash floating beads, calcium carbonate, talc powder, mica powder, porcelain clay, fumed silica, expandable microspheres, diatomite, pozzuolana, barium sulfate, calcium sulfate, glass microspheres, rock powder, wood flour, wood chips, bamboo flour, bamboo chips, rice grains, chopped crop straw, chopped broomcorn straw, graphite powder, metal powder, recycled powder of thermosetting composite materials, plastic particles or powder, or combinations thereof. The glass microspheres may be solid or hollow.

Inner release agents suitable for the invention include any conventional release agents for manufacturing polyurethane, and examples include long-chain carboxylic acids, particularly fatty acids, such as stearic acid; amines of long-chain carboxylic acids, such as stearamide; fatty acid esters; metal salts of long-chain carboxylic acids, such as zinc stearate; or polysiloxanes.

Examples of flame retardants suitable for the invention include triaryl phosphates, trialkyl phosphates, triaryl or trialkyl phosphates containing halogen, melamine, melamine resin, halogenated paraffin, red phosphorus or combinations thereof.

Other aids suitable for the invention include moisture scavengers, such as molecular sieves, silanes or oxazolidines; antifoaming agents, degassing agents, air release agents such as polydimethylsiloxane; coupling agents, such as monoethylene oxide. A coupling agent is particularly preferred for enhancing the binding strength between a resin matrix and a fibrous reinforcement material. Wetting agents are particularly preferred for improving fiber wetting during infiltration of a fibrous reinforcement material. Fine filler, for example, clay or fumed silica, is usually used as a thixotropic agent.

### Manufacturing process of the molded parts

Like in any other production processes of polymers, the manufacturing of the polyurethane-poly(meth)acrylate resin process needs the final step of curing, wherein the three-dimensional (interpenetrating) network of the polyurethane-poly(meth)acrylate resin is formed. Especially in the production of large parts, e.g. composite parts, the minimum curing time needed may be different in the various regions of the part.

The use of the polyurethane-poly(meth)acrylate resin described above offers the advantage that the curing progress may be followed and controlled by determination of the color of the resin.

The manufacturing process of the molded part made from above described polyurethane-poly(meth)acrylate reactive composition comprises the following steps:
a) mixing component B) with components A) and C) to form a polyurethane-poly(meth)acrylate resin mixture M
b) introducing the mixture M into a mold,
c) reacting M to an uncured polyurethane-poly(meth)acrylate resin R and
d) subsequent curing of R under heating to a temperature between 70 - 140 °C until the degree of conversion is ≥ a predefined value V,
and wherein the degree of cure is determined by the optical testing method comprising the analysis of the color of a polyurethane-poly(meth)acrylate resin R as described below.

In a preferred embodiment, V is at least 90 %, preferably at least 95 %.

The degree of conversion may e.g. be measured based on DIN EN ISO 11357-5:2014 by Differential Scanning Calorimetry (DSC).

The optical testing method according to the invention comprises the analysis of the color of the polyurethane-poly(meth)acrylate resin R made from the polyurethane-poly(meth)acrylate reactive composition for the determination of the degree of conversion of the polyurethane-poly(meth)acrylate resin R.

The analysis of the color of R is preferably by visual means or by a quantitative color detection method.

The quantitative detection method may for example be conducted according to EN ISO 11664-4 "Colorimetry -- Part 4: CIE 1976 L*a*b* Colour space" or by determination of an RGB - histogram, with a color determination device, e.g. a spectrophotometer or a digital photographic device with suitable software.

The optical testing method preferably comprises the comparison of the result of the color analysis of R with a color chart prepared before, which either shows the color or the numerical color code (e.g. L*a*b or RGB - values) of the respective polyurethane-poly(meth)acrylate resin in different degrees of conversion ("predetermined color chart").

Preferably, the optical testing method for the determination of the degree of conversion comprises the comparison of the colors in a color table, containing pictures of the color of the respective resin in different curing degrees, and the visually analyzed color of R. This comparison is done by an operator, which can be either a person or a suitable digital device.

In another embodiment, the optical testing method comprises the quantitative analysis of the color of the resin, e.g. according to EN ISO 11664-4 "Colorimetry -- Part 4: CIE 1976 L*a*b* Colour space" or by determination of an RGB - histogram, with a suitable color determination device. Suitable color determination devices are e.g. spectrophotometers or photographic devices combined with suitable software, which are known to the person skilled in the art and commercially available.

A preferred Step d) may especially comprise the following procedure:
ii) comparing the data from a predetermined color chart defining criteria for the color of the polyurethane-poly(meth)acrylate resin to be achieved ("criteria for color") with the measured color data of the resin using the optical testing method,
ii) giving the information that criteria for color is achieved to an operator running the process, being either a person or an automated control device,
iii) finishing the curing process by the operator.

The invention furthermore is directed to a detection system comprising a device conducting the optical testing method and a computer based system executing the method comprising steps i) - iii).

### Composite manufacturing process

In a preferred embodiment, the inventive process described herein is used to prepare a molded composite part. For the preparation of the composite part, the polyurethane-poly(meth)acrylate reactive composition is mixed with a reinforcement material or injected into the reinforcement material e.g. by vacuum assisted resin transfer molding (VARTM) and / or resin transfer molding (RTM).

Suitable reinforcement materials for the invention include glass fibers, carbon nanotubes, carbon fibers, polyester fibers, natural fibers, aramid fibers, nylon fibers, basalt fibers, boron fibers, silicon carbide fibers, asbestos fibers, whiskers, hard particles, metal fibers and combinations thereof, preferably glass fibers and/or carbon fibers.

In an embodiment of the invention, the reinforcement material preferably has an amount of 1-90 wt.-%, more preferably 30-85 wt.-%, most preferably 50-80 wt.-%, based on 100 wt.-% by weight of the polyurethane-poly(meth)acrylate composite material.

The use of a core material in combination with a polyurethane-poly(meth)acrylate resin matrix and a reinforcement material facilitates the molding of the composite material and the weight reduction of the composite material. A core material commonly used in the art may be used for the polyurethane- poly(meth)acrylate composite material of the invention, examples of which include but are not limited to polystyrene foam such as COMPAXX® foam; polyester PET foam; polyimide PMI foam; polyvinyl chloride foam; metal foams, such as those available from Mitsubishi Co.; balsa wood; and the like.

Specifically when being used for large parts, the process overcomes the deficiencies of the prior art with regard to differences of the degree of curing in the various regions of the part. As a result, the polyurethane-poly(meth)acrylate molded parts such as composite parts prepared by the inventive process have unique properties such as excellent mechanical properties, e.g. a high thermal deformation temperature, high tensile and flexural strength, high resistance to fatigue, high ductility, no content of styrene, and low shrinkage rate.

These molded parts prepared with the polyurethane-poly(meth)acrylate reactive composition may be used to manufacture wind generator blades, wind generator nacelle housings, watercraft propeller blades, hulls, interior and exterior automobile decorative parts, automobile bodies, radomes, machinery structural members, decorative parts and structural members for architectures and bridges, especially wind generator blades.

The invention will be further illustrated with reference to the following specific examples. However, it is to be appreciated that these examples are only intended to illustrate the invention without limiting the scope of the invention.

### Experimental section:

### Component A:

A-1: polymeric MDI, NCO-content 30.5-32.5%, 35-40% monomeric MDI (Desmodur® 1511L from Covestro Deutschland AG)

### Component B:

### B1)

B1-1: Hydroxypropyl (meth)acrylate (HPMA), Visiomer® HPMA98 from Evonik, OH-value = 389 mg KOH/g, f=1, f(olefine)=1

### B2)

B2-1: polyether based on propylene oxide, starter component = 1,2-propylene glycol, OH-value = 260 g KOH/g (Arcol polyol 1004 from Covestro Deutschland AG)
B2-2: polyether based on propylene oxide, starter component = glycerol, OH-value = 400 g KOH/g (Arcol polyol 1030 from Covestro Deutschland AG)
"Polyol Mix": mix of B2-1 and B2-2 in wt.-% 1:1, OH-value: 330 mg KOH/g

### B3) and B4)

B3/4-1: Accelerator NL-49P from AkzoNobel containing Cobalt(II) 2-ethylhexanoate (1wt.-% Cobalt)

### Component C)

C-1: t-Butyl peroxybenzoate (Trigonox® C from AkzoNobel)

### Preparation of the polyurethane-poly(meth)acrylate reactive composition for Samples 1-5:

Components A, B and C (respective amounts are given in Table 1) were mixed in a beaker at room temperature and stirred with a spatula for 45s. For the preparation of Samples 1 - 5, the resulting polyurethane-poly(meth)acrylate reactive composition (-150 g) was poured in an glass mould, with a thickness of 4 mm.

**Table 1.**

| Component | Formulation | |
|---|---|---|
| A | A-1 | 86 wt.-% |
| c | C-1 | 2 wt.-% |
| B | Polyol Mix | 50 wt.-% |
| | B1-1 | 50 wt.-% |
| | B3/4-1 | 0.2 wt.-% |
| Mixture B:(A+C) (by mass) | | 100:88 |
| Initial viscosity (@25°C, mPa*s) | | 58 |
| Pot-life (minutes) | | 120 |

### Viscosity measurements:

Viscosity was measured based on DIN EN ISO 2555:2017 with a Brookfield DV2T Viscometer equipped with 8mL chamber and SC4-18 spindle with maximum 80% torque. The small chamber was inserted into a water jacket connected with a water bath (Lauda E300-RE306) set to 25C.

Components A, B and C at 25 °C and stirred for 45s before measurement.

Initial viscosity was measured 2 minutes after mixing, and after this the viscosity build-up was tracked.

The pot-life was determined being the overall time from initial mixing until the viscosity of the system reached 300 mPa*s.

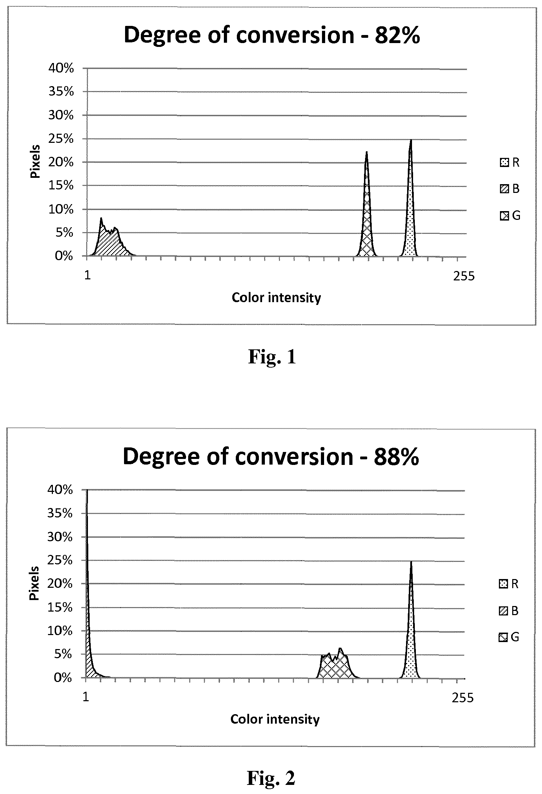

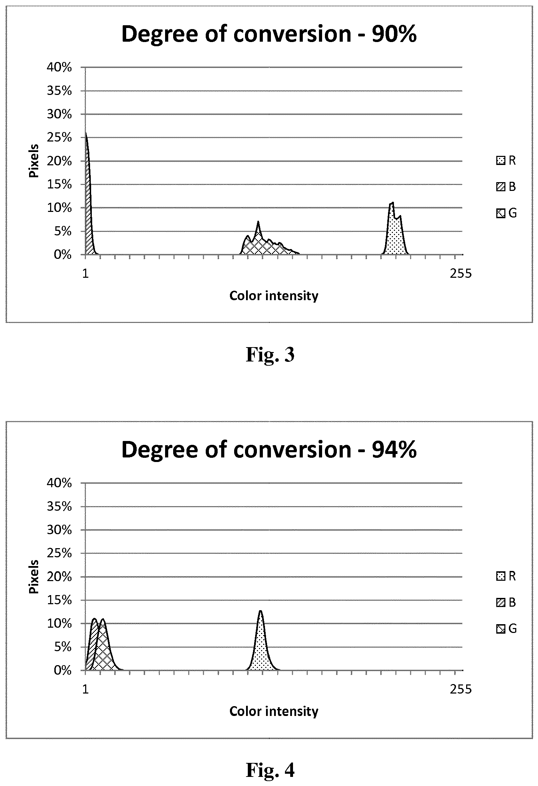

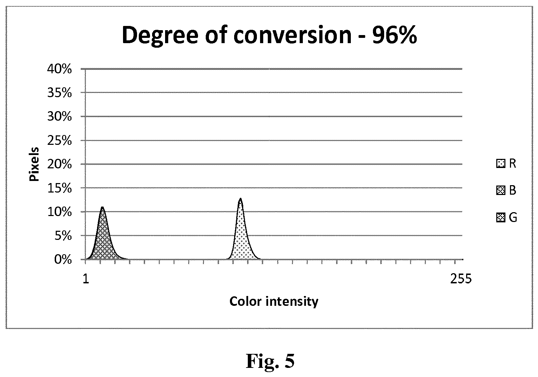

Samples 1 - 5 were cured in the glass molds in an oven at 70°C for the time ranges 1h,2h,3h,12h,24h, respectively (see Table 2). From each sample, the degree of conversion was determined and the color was measured (a color histogram prepared). Fig. 1 - 5 show the color histograms of the samples depending on the respective degree of conversion. The intensity of each of the color components red (R), green (G) and blue (B) is shown by peaks in different patterns. In Fig. 5 (degree of conversion = 96%), B- and G- peaks overlap.

**Table 2.**

| Sample No. | Curing time | Degree of conversion | Color histogram |
|---|---|---|---|
| 1 | 1h | 82% | 1 |
| 2 | 2h | 88% | 2 |
| 3 | 3h | 90% | 3 |
| 4 | 12h | 94% | 4 |
| 5 | 24h | 96% | 5 |

### Measurement of Color:

After curing, the samples were scanned using a Develop ineo+ 454e to create pdf-files to be analyzed by software GNU Image Manipulation Program GIMP 2.8.22 in order to create RGB color histograms describing the color of each sample by the intensity of each of the color components red (R), green (G) and blue (B).

### Measurement of Degree of Conversion:

Degree of conversion was measured based on DIN EN ISO 11357-5:2014 by Differential Scanning Calorimetry (DSC) using TA Instrument DSC Q20. For the measurement a ramp 10K/min from 0-200C was used.

The set of color histograms as a function of the respective degrees of conversion measured for the polyurethane-poly(meth)acrylate resin samples (= predetermined color chart) may now be used for the determination of the conversion rate for the respective polyurethane-poly(meth)acrylate resin. The use of this predetermined color chart therefore offers an easy tool for the determination of the curing time needed until the degree of conversion reaches a predefined value V in the manufacturing process of molded parts from the respective polyurethane-poly(meth)acrylate resin.

## Claims

1. An optical testing method analyzing the color of a polyurethane-poly(meth)acrylate resin made from a polyurethane-poly(meth)acrylate reactive composition comprising:
A) an isocyanate component comprising one or more organic polyisocyanates;
B) an isocyanate-reactive component comprising:
B1) (meth)acrylate monomer containing hydroxyl - functionality
B2) organic polyol;
B3) a component acting a as radical polymerization accelerator,
B4) a component acting as curing indicator,
C) a radical reaction initiator
for the determination of the degree of conversion of the polyurethane-poly(meth)acrylate resin R,
whereby components B3) and B4) may be identical.

2. An optical testing method according to claim 1, wherein the polyurethane-poly(meth)acrylate reactive composition comprises a cobalt(II) salt which may act as radical polymerization accelerator B3) and curing indicator B4) at the same time.

3. The optical testing method according to the preceding claims, wherein the analysis comprises the determination of the color of R by visual means or by a quantitative color detection method.

4. The optical testing method according to claim 3, wherein the color of R is quantitatively determined, e.g. according to EN ISO 11664-4 "Colorimetry -- Part 4: CIE 1976 L*a*b* Colour space" or by determination of an RGB - histogram, with a color determination device, e.g. a spectrophotometer or a digital photographic device with suitable software.

5. The optical testing method according to any of the preceding claims, wherein the degree of conversion is determined by comparison of the result of the color determination of R with a predetermined color chart, which either shows the color or the numerical color code (e.g. LAB or RGB - values) of the respective polyurethane-poly(meth)acrylate resin in different curing degrees.

6. A manufacturing process for a molded part made from a polyurethane-poly(meth)acrylate reactive composition comprising:
A) an isocyanate component comprising one or more organic polyisocyanates;
B) an isocyanate-reactive component comprising:
B1) (meth)acrylate monomer containing hydroxyl - functionality
B2) organic polyol;
B3) component acting as radical polymerization accelerator,
B4) a component acting as curing indicator,
C) a radical reaction initiator,
whereby components B3) and B4) may be identical,
wherein the manufacturing process comprises the following steps:
a) mixing components A), B) and C) to form a polyurethane-poly(meth)acrylate resin mixture M in a one-pot process,
b) subsequent introducing the mixture M into a mold,
c) subsequent reacting M to an uncured polyurethane-poly(meth)acrylate resin R and
d) subsequent curing of R under heating to a temperature between 70 - 140 °C until the degree of conversion is ≥ a predefined value V,
wherein the degree of conversion is determined by the optical testing method according to any of claims 1 - 5.

7. Process according to claim 6, wherein the polyurethane-poly(meth)acrylate reactive composition comprises a cobalt(II) salt which may act as radical polymerization accelerator B3) and curing indicator B4) at the same time.

8. Process according to any one of claims 6 or 7, wherein V = 90 %, preferably 95 %.

9. The process according to one of claims 6 to 8, wherein step d) comprises the following sub-steps
i) comparing the data from a predetermined color chart defining criteria for the color of the polyurethane-poly(meth)acrylate resin to be achieved ("criteria for color") with measured color data of the resin using the optical testing method,
ii) giving the information that criteria for color is achieved to an operator running the process, being either a person or an automated control device,
iii) finishing the curing process under d) by the operator.
iii) finishing the curing process by the operator.

10. A composite manufacturing process comprising the process according to any one of claims 6 to 9, wherein step b) comprises the injection of a polyurethane-poly(meth)acrylate reactive composition into a reinforcement material via vacuum assisted resin transfer molding (VARTM) and / or resin transfer molding (RTM).

11. A system for carrying out step d) according to claim 10, comprising a device conducting the optical testing method and a computer based system executing the method comprising steps i) - iii).

12. A process to produce a wind generator blade comprising the process to any of claims 6 to 9.
